# EUROPEAN PATENT APPLICATION

(11) **EP 4 442 476 A1**
(43) Date of publication of application: **09.10.2024**
(21) Application number: 22901217.4
(22) Date of filing: 28.11.2022
(51) Int. Cl.: B60H 1/00

(54) **VEHICULAR AIR-CONDITIONING DEVICE**

(30) Priority: 02.12.2021 JP 2021195876
(71) Applicant: Valeo Japan Co., Ltd., Kumagaya-Shi SAITAMA 360-0193 (JP)
(72) Inventor: UENO, Shota, Kumagaya-shi Saitama 360-0193 (JP)
(74) Representative: Valeo Systèmes Thermiques
(86) International application number: PCT/JP2022/043675
(87) International publication number: WO 2023/100784

(57) **Abstract**

To provide a vehicular air-conditioning device that is configured to easily control the temperature and air volume of blown air. A vehicular air-conditioning device (10; 10A; 10B; 10C; 10D; 10E) includes a drive door (30; 30A) rotatably provided and a driven door (40; 40B) driven by the drive door (30; 30A). The driven door (40; 40B) includes a driven door front surface part (41) that can face an evaporator (22) and a driven door rear surface part (42) that is a rear surface of the driven door front surface part (41). The driven door front surface part (41) is formed with a driven door guide part (43; 43B) that guides part of air flowing near the driven door front surface part (41) toward a space (Se).

## Description

### Technical Field

The present invention relates to a vehicular air-conditioning device for controlling the temperature in a vehicle interior.

### Background Art

Vehicular air-conditioning devices are mounted on many vehicles to control the temperature in a vehicle interior. Previously existing technologies related to a vehicular air-conditioning device include a technology disclosed in PTL 1.

The vehicular air-conditioning device disclosed in PTL 1 has, inside its case, an evaporator for cooling air and a heater for heating air. The vehicular air-conditioning device also has an air mix door that is rotatably provided between the evaporator and the heater and is operable to control the flow rate of air passing through the heater. The air mix door has a drive door rotatably provided and a driven door driven by the drive door.

The driven door is connected to the drive door through a link and can be operated on a track different from a track on which the drive door swings. This enables reducing the space required to open and close the air mix door, which downsizes the air-conditioning device.

### Citation List

### Patent Literature

PTL 1: JP2000-38016A

### Summary of Invention

### Technical Problem

In the meantime, the case of the vehicular air-conditioning device generally has a plurality of air outlets. The air outlets include, for example, a vent outlet from which air is blown toward the upper body of a passenger and a foot outlet from which air is blown toward the feet of a passenger. Further, in many cases, the vent outlet and the foot outlet are provided on each of the left and right sides of the vehicle interior.

Further, the vehicular air-conditioning device has an operation mode called a bi-level mode in which air is blown from both of the vent outlet and the foot outlet. In the bi-level mode, it is required that the conditioned air blown out of the foot outlet is hotter than the conditioned air blown out of the vent outlet by a predetermined temperature. It is also required that the temperature of the conditioned air blown out of the plurality of vent outlets has as little temperature difference as possible. Both are required to ensure the comfort of passengers.

Not only in the bi-level mode, in vehicular air-conditioning devices having a plurality of air outlets, it is required that the conditioned air from the individual air outlets is blown out at an arbitrary temperature or an arbitrary air volume.

In the vehicular air-conditioning device having a driven door as disclosed in PTL 1, part of air that has passed through the evaporator reaches the driven door, and passes through a heater core and an air mixing space so as to be conditioned, and the conditioned air is blown out of the plurality of air outlets provided in the case.

At this time, control to ensure the comfort of passengers, e.g., control of a temperature difference of air blown out of the individual air outlets, making the temperature of the conditioned air uniform, or making the volume of air blown uniform, can be made by devising the shape of the case, installing a component for air mixture (so-called a baffle plate) in the mixing space, and so on. However, the control is difficult in many cases due to constraints such as downsizing the vehicular air-conditioning device, ensuring air flow rate, and noise reduction. In order to ensure the comfort of passengers, it is desirable to easily control the temperature and air volume of blown air.

An object of the present invention is to provide a vehicular air-conditioning device that is configured to easily control the temperature and air volume of blown air.

### Solution to Problem

In the following description, reference numerals in the accompanying drawings are appended in parentheses to facilitate understanding of the present invention, but the present invention is not limited to the illustrated embodiments.

According to the present invention, a vehicular air-conditioning device (10; 10A; 10B; 10C; 10D; 10E) is provided. The vehicular air-conditioning device (10; 10A; 10B; 10C; 10D; 10E) includes a case (21; 21D) in which air can flow, the case (21; 21D) housing an evaporator (22) capable of cooling air, a heater (23) capable of heating air that has passed through the evaporator (22), and an air mix door (24; 24A; 24B) capable of controlling a ratio between air passing through the heater (23) and air bypassing the heater (23), and the case (21; 21D) being formed with a plurality of outlets (21d, 21v, 21f; 21r) for blowing out air to a vehicle interior, in which
the air mix door (24; 24A; 24B) includes
   a drive door (30; 30A) that includes a rotary shaft (31) that extends so as to be substantially orthogonal with reference to a flow direction of air bypassing the heater (23) and is rotatably provided in the case (21; 21D), and a first closing plate (32) that extends from the rotary shaft (31) to be movable in an upstream of the rotary shaft (31), and
   a driven door (40; 40B) that is connected to the first closing plate (32) via a link (50) and driven by the drive door (30; 30A);
the drive door (30; 30A) is controlled to be at any positions of the following: a fully cool position at which a ratio of air bypassing the heater (23) is maximized; a fully hot position at which a ratio of air passing through the heater (23) is maximized; and a temperature conditioned position which is a position between the fully cool position and the fully hot position and at which part of air having passed through the evaporator (22) bypasses the heater (23);
in a case where the drive door (30; 30A) is at the temperature conditioned position, an end portion of the drive door (30; 30A) and an end portion of the driven door (40; 40B) are spaced apart, and a space (Se) through which air can pass is formed between the end portion of the drive door (30; 30A) and the end portion of the driven door (40; 40B) ;
in a case where the drive door (30; 30A) is at the temperature conditioned position, a heater-door flow path (R2) in which part of air having passed through the evaporator (22) passes is formed between the rotary shaft (31) and the heater (23);
the driven door (40; 40B) includes a driven door front surface part (41) that can face the evaporator (22) and a driven door rear surface part (42) that is a rear surface of the driven door front surface part (41); and
the driven door front surface part (41) is formed with a driven door guide part (43; 43B) that guides part of air flowing near the driven door front surface part (41) toward the space (Se).

### Advantageous Effects of Invention

According to the present invention, it is possible to provide a vehicular air-conditioning device that is configured to easily control the temperature and air volume of blown air.

### Brief Description of Drawings

[FIG. 1] FIG. 1 is a rear view of a vehicular air-conditioning device according to Example 1.
[FIG. 2] FIG. 2 is a cross-sectional view of the vehicular air-conditioning device illustrated in FIG. 1 as viewed from the side.
[FIG. 3] FIG. 3 is a perspective view of an air mix door illustrated in FIG. 2.
[FIG. 4] FIG. 4 is a cross-sectional view of the air mix door illustrated in FIG. 2.
[FIG. 5] 5A is a diagram illustrating a vehicular air-conditioning device in a fully cool state, and 5B is a diagram illustrating a vehicular air-conditioning device in a fully hot state.
[FIG. 6] FIG. 6 is a cross-sectional view of an air mix door illustrated in 5A.
[FIG. 7] 7A is a diagram illustrating operation of a vehicular air-conditioning device according to a comparative example, and 7B is a diagram illustrating operation of a vehicular air-conditioning device according to an example.
[FIG. 8] FIG. 8 is a cross-sectional view of a vehicular air-conditioning device according to Example 2 as viewed from the side.
[FIG. 9] FIG. 9 is a cross-sectional view of the vehicular air-conditioning device illustrated in FIG. 8 as viewed from above.
[FIG. 10] FIG. 10 is a bottom view of a butterfly door portion illustrated in FIG. 9.
[FIG. 11] FIG. 11 is a perspective view of an air mix door used in a vehicular air-conditioning device according to Example 3.
[FIG. 12] FIG. 12 is a cross-sectional view of a vehicular air-conditioning device according to Example 4 as viewed from the side.
[FIG. 13] FIG. 13 is a cross-sectional view of a vehicular air-conditioning device according to Example 5 as viewed from the side.
[FIG. 14] FIG. 14 is a cross-sectional view of a vehicular air-conditioning device according to Example 6 as viewed from the side.

### Description of Embodiments

Embodiments of the present invention will be described below based on the accompanying drawings. In the description, front and rear refer to front and rear with reference to a direction in which a vehicle travels, and left and right refer to left and right with reference to a passenger in the vehicle. In the drawings, Fr and Rr indicate the front and the rear respectively, Le and Ri indicate the left and the right respectively, and Up and Dn indicate the up and the down respectively.

### <Example 1>

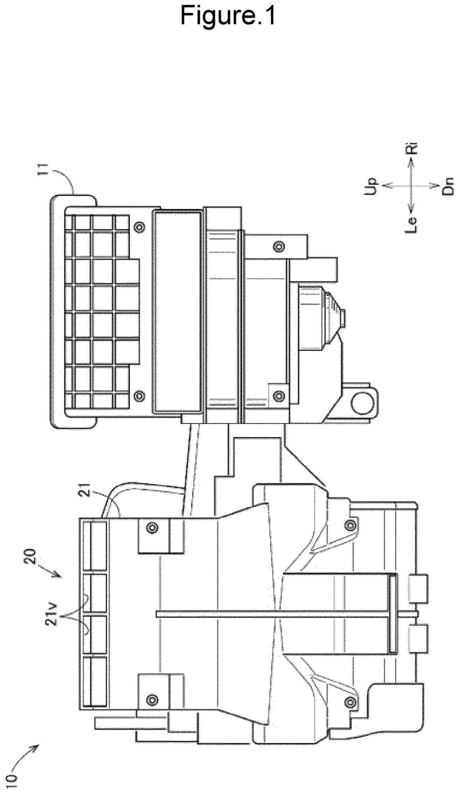

Reference is made to FIG. 1. A vehicular air-conditioning device 10 (hereinafter abbreviated as "air-conditioning device 10") is disposed in a front part of a vehicle interior to extend in the left and right direction. The air-conditioning device 10 includes a blower portion 11 that can take in air from the vehicle interior and/or outside the vehicle to blow air, and a temperature control portion 20 that can control the temperature of blowing air delivered from the blower portion 11 to a predetermined temperature. Air delivered from the blower portion 11 toward the left flows toward the back (the front side of the drawing) in the temperature control portion 20.

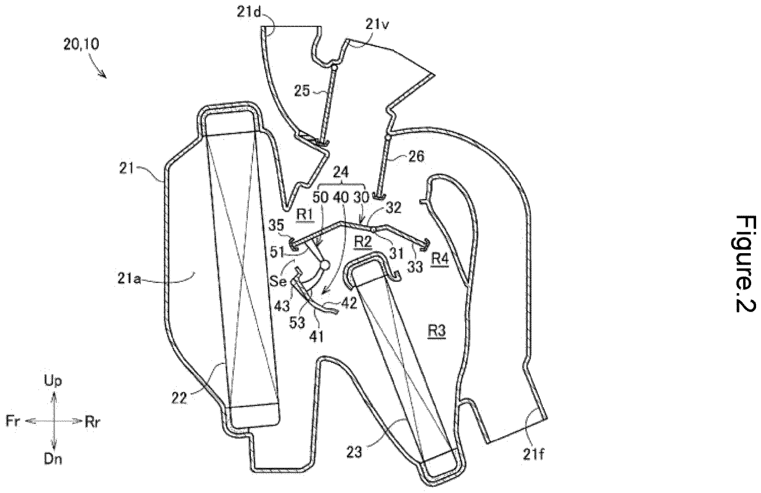

Reference is made to FIG. 2. The temperature control portion 20 includes a case 21 in which air can flow. Inside the case 21, an evaporator 22 capable of cooling air, a heater 23 capable of heating air that has passed through the evaporator 22, and an air mix door 24 capable of controlling a ratio between air passing through the heater 23 and air bypassing the heater 23 are accommodated.

Further, in the case 21, an inlet 21a into which air delivered from the blower portion 11 (FIG. 1) is introduced, a defroster outlet 21d for blowing out air toward the windshield, a vent outlet 21v for blowing out air toward the upper body of a passenger, and a foot outlet 21f for blowing out air toward the feet of the passenger are formed.

Hereinafter, the defroster outlet 21d, the vent outlet 21v, and the foot outlet 21f may be collectively referred to as the "outlets 21d, 21v, and 21f". That is, it can be said that the case 21 is formed with the plurality of outlets 21d, 21v, and 21f for blowing out air to the vehicle interior.

The defroster outlet 21d and the vent outlet 21v are formed in an upper part of the case 21, and the foot outlet 21f is formed in a lower part of the case 21. Each of the outlets 21d, 21v, and 21f may be configured to directly face the vehicle interior or to deliver air to the vehicle interior via a duct or the like.

Incidentally, the case 21 is partitioned into left and right rooms by a partition wall (not illustrated). The outlets 21d, 21v, and 21f are formed in each of the left and right rooms.

Further, inside the case 21, a first open/close door 25 that is swingably provided to open and close the defroster outlet 21d and the vent outlet 21v, and a second open/close door 26 that is swingably provided to open and close the vent outlet 21v and the foot outlet 21f are accommodated.

The first open/close door 25 and the second open/close door 26 are operated, for example, by a motor. A control unit connected to the motor energizes the motor in accordance with a set temperature and the like, and controls opening/closing of the defroster outlet 21d, the vent outlet 21v, and the foot outlet 21f, and the opening degree for a case where the defroster outlet 21d, the vent outlet 21v, and the foot outlet 21f are open.

Inside the case 21, a plurality of flow paths in which air that has passed through the evaporator 22 flows is formed. A flow path in which air passes through the evaporator 22 and is directly led to the outlets 21d, 21v, and 21f is referred to as a cold air flow path R1, a flow path in which air passes through a space between the air mix door 24 and the upper part of the heater 23 is referred to as a heater-door flow path R2, a flow path in which air passes through the heater 23 is referred to as a hot air flow path R3, and a flow path that is located on the downstream of the heater-door flow path R2 and the hot air flow path R3 and in which blowing air mixed with cold air and hot air passes is referred to as a mix flow path R4.

Note that, in the cold air flow path R1, a region near the second open/close door 26 is a region in which to mix the air that has passed through the mix flow path R4, and thus the region may serve as a second mix flow path.

One evaporator 22 is provided so as to be substantially orthogonal to the direction of air flow (direction from left to right in the drawing). A refrigerant flows in the evaporator 22, and air passing through the evaporator 22 is cooled by heat exchange with the refrigerant.

Examples of the heater 23 include a hot water heater in which hot water flows or an electric heater that generates heat by energization. Alternatively, both the hot water heater and the electric heater can be used as the heater 23.

The air mix door 24 includes a drive door 30 rotatably provided, a driven door 40 driven by the drive door 30, and a link 50 connecting the drive door 30 and the driven door 40 to each other.

In the state illustrated in the drawing, part of the air that has passed through the evaporator 22 passes through the heater 23. Such a state is called a temperature conditioned state, and it can be said that the drive door 30 is at a temperature conditioned position. When the drive door 30 is at the temperature conditioned position, a front end of the drive door 30 and an upper end of the driven door 40 are spaced apart. It can be said that, between an end of the drive door 30 and an end of the driven door 40, a space Se is formed through which air can pass.

The drive door 30 includes a rotary shaft 31 that extends in the left and right direction with respect to air flowing in the front and rear direction and is provided above the heater 23, a first closing plate 32 that extends from the rotary shaft 31 toward the upstream of the heater 23 and is capable of controlling the flow rate of air passing through the heater 23, and a second closing plate 33 that extends from the rotary shaft 31 toward the downstream of the heater 23 and is capable of controlling the flow rate of air passing through the heater 23.

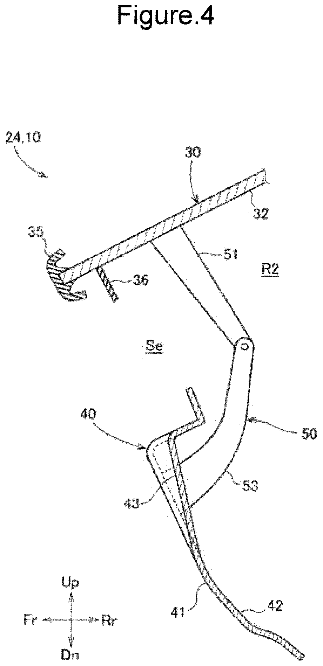

Reference is made to FIG. 4. The drive door 30 also includes a first seal 35 that is formed along the end of the first closing plate 32 to block the air flow toward the heater 23 (see FIG. 2) side by coming into contact with the driven door 40, and two second seals 36 that are formed in the rear surface of the first closing plate 32 to block the air flow toward the heater 23 side by coming into contact with the driven door 40.

The first seal 35 is formed to be continuous with the end of the first closing plate 32, and the two second seals 36 are formed intermittently on the rear surface of the first closing plate 32. The first seal 35 and the second seals 36 come into contact with different parts of the first closing plate 32. The detailed description is given later.

Reference is made to FIG. 2. The rotary shaft 31 extends so as to be substantially orthogonal with reference to the flow direction of air bypassing the heater 23 and is rotatably provided in the case 21.

The rotary shaft 31 is rotated by the motor, for example, in response to the control unit energizing the motor. The control unit energizes the motor so that the position of the drive door 30 is controlled based on the set temperature and the like.

Reference is made to FIG. 4. The driven door 40 is connected to the first closing plate 32 via the link 50. A track on which the driven door 40 is driven is defined by a rail (not illustrated) . The rail is formed on, for example, an inner surface of the case 21. In other words, the driven door 40 is driven by the drive door 30, and the track of the driven door 40 is defined by the rail.

The driven door 40 is a member made of a single plate. The driven door 40 includes a driven door front surface part 41 that can face the evaporator 22 (see FIG. 2), a driven door rear surface part 42 that is the rear surface of the driven door front surface part 41, and a driven door guide part 43 that is formed on the driven door front surface part 41 to guide part of air flowing near the driven door front surface part 41 to the space Se.

The driven door 40 may include a hollow member in which two or more members are overlaid, instead of the single plate.

The driven door guide part 43 includes a concave portion formed in a concave shape so as to be spaced apart from the evaporator 22 (see FIG. 2), and is formed gradually deeper in a curved shape toward the space Se.

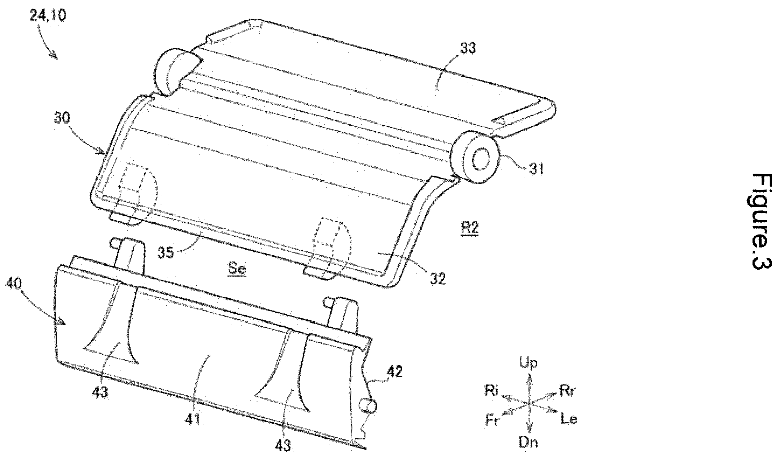

Reference is also made to FIG. 3. The driven door guide part 43 is formed at two locations of the driven door front surface part 41 to narrow gradually toward the space Se. The positions at which the second seal 36 is formed correspond to the positions at which the driven door guide part 43 is formed. This enables the second seal 36 to come into contact with the driven door guide part 43.

The driven door guide part 43 is formed up to an end of the driven door front surface part 41, and an end of the driven door guide part 43 faces the space Se.

Note that the driven door guide part 43 is not necessarily formed up to the end of the driven door front surface part 41.

Reference is made to FIG. 4. The link 50 includes a first link member 51 that is fixed to the rear surface of the first closing plate 32 and a second link member 53 that has one end connected to the first link member 51 and has the other end fixed to the driven door rear surface part 42.

The description is given of an operation of the air-conditioning device 10 described above.

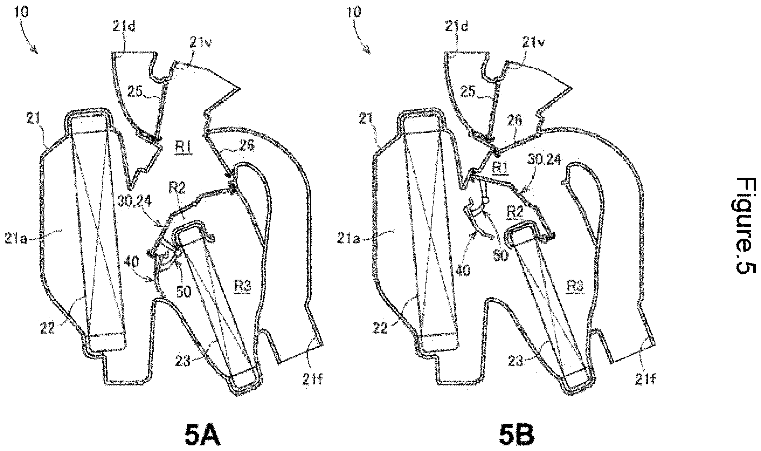

Reference is made to FIG. 5. 5A illustrates the air-conditioning device 10 in a state where the heater-door flow path R2 and the hot air flow path R3 are closed. In this state, air that has passed through the evaporator 22 flows toward the vent outlet 21v without passing through the heater 23. In other words, in the state illustrated in 5A, the ratio of air bypassing the heater 23 is the maximum value. This state is called a fully cool state and the position of the drive door 30 in the fully cool state is called a fully cool position.

In the fully cool state, for example, the vent outlet 21v is fully open and the defroster outlet 21d and the foot outlet 21f are fully closed. In this case, all of the air that has passed through the evaporator 22 is blown out of the vent outlet 21v to the vehicle interior. The air passing through the vent outlet 21v is blown out toward the upper body of a passenger.

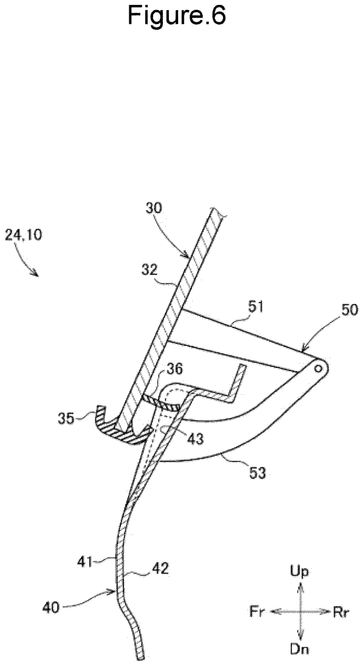

Reference is made to FIG. 6. In the fully cool state, the first seal 35 is in contact with the driven door front surface part 41 except for the portion at which the driven door guide part 43 is formed. On the other hand, the second seal 36 is in contact with the driven door guide part 43. This prevents air from flowing toward the heater 23 (see FIG. 5A) in the fully cool state.

Reference is made to FIG. 2. FIG. 2 illustrates the air-conditioning device 10 in a state where the cold air flow path R1, the heater-door flow path R2, and the hot air flow path R3 are open. In this state, air that has passed through the evaporator 22 passes through each of the cold air flow path R1, the heater-door flow path R2, and the hot air flow path R3 to flow toward the vent outlet 21v or the foot outlet 21f. In other words, in the state illustrated in the drawing, the temperature is controlled based on a ratio between air that has passed only through the evaporator 22 and air that has passed through the heater 23. This state is called a temperature conditioned state, and the position of the drive door 30 in the temperature conditioned state is called a temperature conditioned position.

In the temperature conditioned state, for example, the vent outlet 21v and the foot outlet 21f are half open and the defroster outlet 21d is fully closed. In this case, most of the air that has passed through the evaporator 22 and flows on the upper surface side of the first closing plate 32 of the air mix door 24 is blown out of the vent outlet 21v to the vehicle interior. The air passing through the vent outlet 21v is blown out toward the upper body of a passenger.

In the temperature conditioned state, part of the air that has passed through the evaporator 22 passes through the cold air flow path R1, and flows toward the outlets 21d, 21v, and 21f. Further, the residual of the air that has passed through the evaporator 22 passes through the heater-door flow path R2 or the hot air flow path R3. Air heated by the heater 23 as the air passes through the hot air flow path R3 is mixed, in the mix flow path R4, with cold air that has passed through the heater-door flow path R2, so that the temperature thereof is lowered. The air that has passed through the mix flow path R4 is mixed, in the vicinity of the vent outlet 21v and the foot outlet 21f (second mix flow path), with cold air that has passed through the cold air flow path R1, so that the temperature thereof is further lowered and the resultant air is blown out of the vent outlet 21v and the foot outlet 21f.

Mixing the air that has passed through the cold air flow path R1 with the air that has passed through the mix flow path R4 is minimized. The temperature of the hot air is lowered but the air blown out of the vent outlet 21v and the air blown out of the foot outlet 21f have an appropriate temperature difference. As compared with the air blown out of the vent outlet 21v, the air blown out of the foot outlet 21f has a high temperature.

Rotating the drive door 30 can control the ratio between air passing through the heater 23 and air bypassing the heater 23. Reducing the ratio of the air passing through the heater 23 lowers the temperature of air blown out to the vehicle interior. Increasing the ratio of the air passing through the heater 23 raises the temperature of air blown out to the vehicle interior.

Reference is made to FIG. 5. 5B illustrates the air-conditioning device 10 in a state where the cold air flow path R1 is closed. In this state, all of air that has passed through the evaporator 22 passes through the heater 23. In other words, in the state illustrated in 5B, the ratio of air passing through the heater 23 is the maximum value. This state is called a fully hot state and the position of the drive door 30 in the fully hot state is called a fully hot position.

In the fully hot state, for example, the foot outlet 21f is fully open and the defroster outlet 21d and the vent outlet 21v are fully closed. In this case, all of the air that has passed through the evaporator 22 and the heater 23 is blown out of the foot outlet 21f to the vehicle interior. The air passing through the foot outlet 21f is blown out toward the feet of a passenger.

In the states illustrated in FIG. 2 and FIG. 5 (5A and 5B), the opening and closing of the outlets 21v, 21f, and 21d can be appropriately changed. For example, in the fully hot state, air may be blown out of the defroster outlet 21d and the foot outlet 21f.

The air-conditioning device 10 described above is summarized below.

Reference is made to FIG. 4. The driven door front surface part 41 is formed with the driven door guide part 43 that guides air flowing toward the heater-door flow path R2. The driven door guide part 43 guides, toward the heater-door flow path R2, part of air that has passed through the evaporator 22 (see FIG. 2) to flow toward the driven door 40. This enables efficiently blowing air toward an arbitrary location. Blowing air can be smoothly delivered to the outlets 21d, 21v, and 21f (see FIGS. 1 and 2), and thus it is possible to prevent large volume of blown air from flowing to a specific portion accidentally and so on. Alternatively, it is possible to prevent a shortage of blown air that should flow to a specific portion. In other words, the temperature and air volume of blown air can be controlled. The temperature and air volume of blown air can be controlled only by forming the driven door guide part 43 in the driven door 40, and thus it can be said that the temperature and air volume of blown air can be easily controlled.

Further, the driven door guide part 43 includes a concave portion formed in a concave shape. Air can be efficiently blown toward an arbitrary location without increasing the size of the driven door 40.

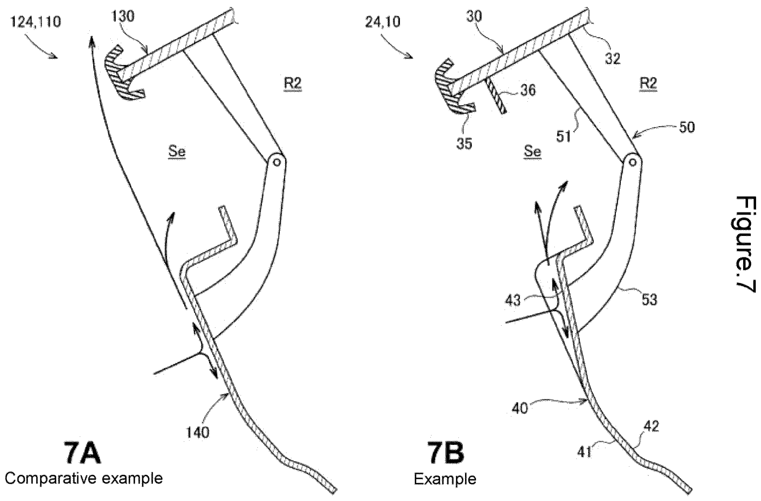

Reference is made to FIG. 7. 7A illustrates an air-conditioning device 110 according to a comparative example. A driven door 140 of an air mix door 124 in the comparative example has no driven door guide part. Air that has reached the driven door 140 flows toward a drive door 130 and a heater (the bottom of the drawing). Most of the air that has flowed toward the drive door 130 flows above the drive door 130 and part of the air that has flowed toward the drive door 130 flows to the heater-door flow path R2.

7B illustrates the air-conditioning device 10 according to the example. The driven door 40 of the air mix door 24 in the example is formed with the driven door guide part 43. The driven door guide part 43 is curved toward the heater-door flow path R2 with reference to the temperature conditioned state. This enables most of air that has reached the driven door 40 to be guided toward the drive door 30, further toward the heater-door flow path R2. This makes it possible to deliver air flowing in the case 21 (see FIG. 2) more smoothly.

Further, the driven door guide part 43 is formed gradually deeper in a curved shape toward the space Se. This enables air to be blown toward the heater-door flow path R2 more smoothly and more efficiently.

Reference is made to FIG. 3. The driven door guide part 43 narrows gradually toward the space Se. This enables wind received from a wider area to be guided toward a predetermined direction, which allows air to be blown more efficiently.

### <Example 2>

Next, an air-conditioning device 10A in Example 2 is described based on the drawings.

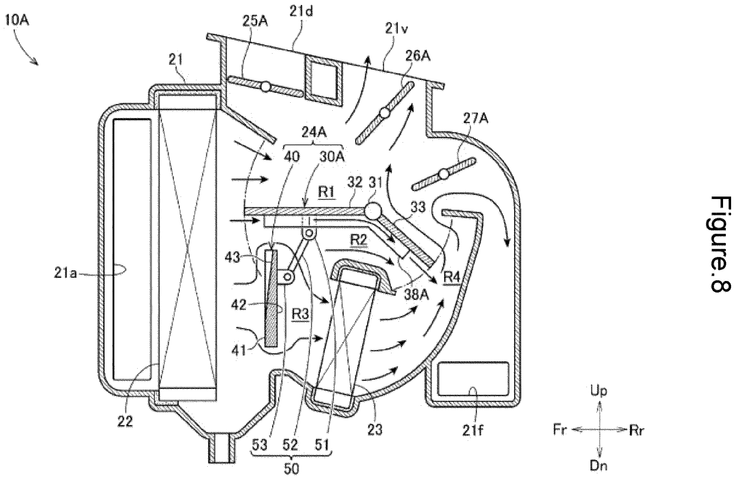

FIG. 8 illustrates a cross-sectional configuration of the air-conditioning device 10A according to Example 2 and corresponds to FIG. 2. As for parts in common with the air-conditioning device 10 (see FIG. 2) according to Example 1, the same reference numerals are used and the detailed descriptions are omitted.

In the air-conditioning device 10A according to Example 2, an air mix door 24A having a configuration different from that of the air-conditioning device 10 (see FIG. 2) according to Example 1 is used. The other configurations are the same as those of the air-conditioning device 10 according to Example 1.

A first open/close door 25A is operable to open and close only the defroster outlet 21d, and a second open/close door 26A is operable to open and close only the vent outlet 21v. The air-conditioning device 10A further includes a third open/close door 27A that is operable to open and close only the foot outlet 21f.

The link 50 of the air mix door 24A includes a rod 52 for connecting the first link member 51 and the second link member 53.

In a drive door 30A of the air mix door 24A, a drive door guide part 38A is provided so as to face the heater-door flow path R2. The drive door guide part 38A serves to guide wind guided by the driven door guide part 43. In the temperature conditioned state, part of air that has passed through the evaporator 22 is guided by the drive door guide part 38A.

The drive door guide part 38A is formed by a rib integrally raised from the drive door 30A. The drive door guide part 38A preferably has a length equal to or greater than a half of the entire length of the first closing plate 32 and/or preferably has a length equal to or greater than a half of the entire length of the second closing plate 33. This is to guide air smoothly and reliably.

Further, the drive door guide part 38A preferably has a height equal to or less than a half of the length from the rotary shaft 31 to the heater 23. This is because a smooth air flow can be ensured by preventing the drive door guide part 38A from blocking the heater-door flow path R2 and securing a large area for a flow path.

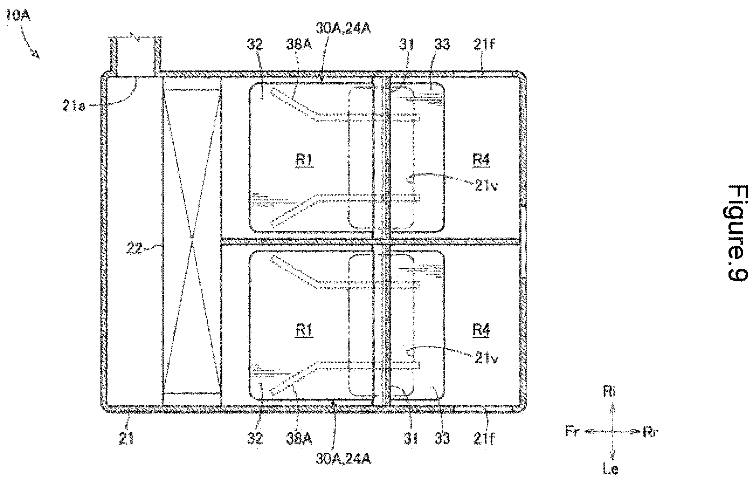

Reference is made to FIG. 9. The two drive door guide parts 38A, 38A are provided for each of the drive doors 30A, 30A. The two drive door guide parts 38A extend in the front and rear direction so as to face each other, gradually narrow from an end on the upstream toward the downstream, and extend substantially parallel to each other from some midpoint.

The drive door guide part 38A may be formed only in any one of the first closing plate 32 and the second closing plate 33.

The air-conditioning device 10A described above also produces a predetermined effect of the present invention.

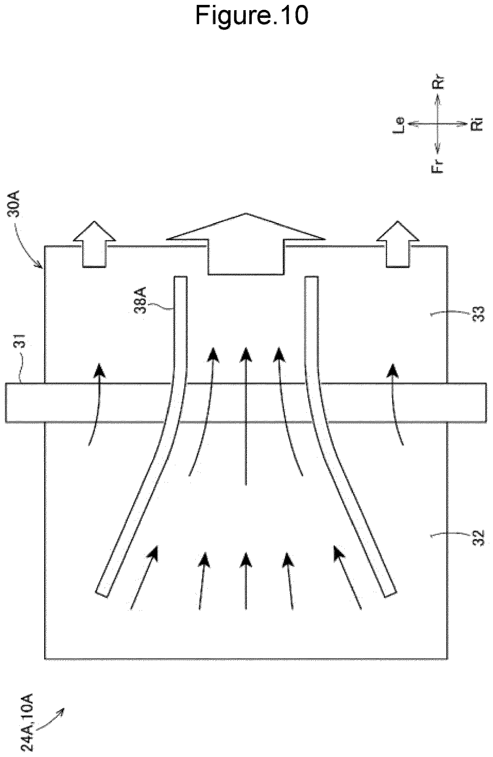

Reference is made to FIGS. 8 and 10. Further, since the drive door guide part 38A is so provided as to face the heater-door flow path R2, air guided by the driven door guide part 43 can be guided to a predetermined direction by the drive door guide part 38A. This results in blowing air more efficiently.

### <Example 3>

Next, an air-conditioning device 10B in Example 3 is described based on the drawings.

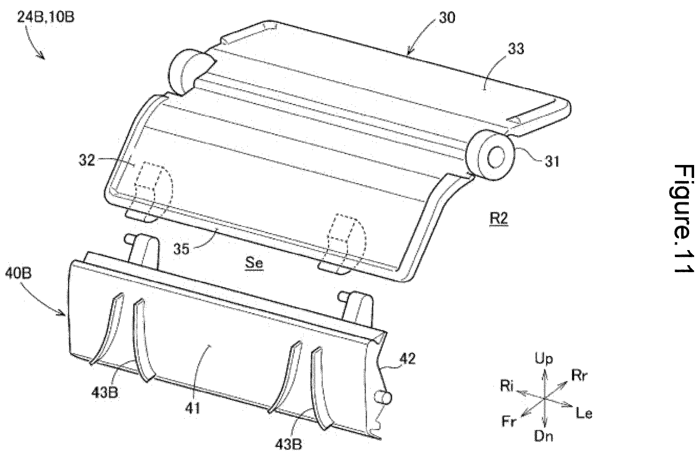

FIG. 11 illustrates an air mix door 24B used in the air-conditioning device 10B according to Example 3. As for parts in common with the air-conditioning device according to Example 1 or Example 2, the same reference numerals are used and the detailed descriptions are omitted.

In the air-conditioning device 10B according to Example 3, an air mix door 24B having a configuration different from that of the air-conditioning device 10 (see FIG. 2) according to Example 1 is used. The other configurations are the same as those of the air-conditioning device 10 according to Example 1.

A driven door 40B is formed with a driven door guide part 43B that guides part of air flowing near the driven door front surface part 41 to the space Se. The driven door guide part 43B is structured by a rib raised from the driven door front surface part 41.

The driven door guide part 43B is formed at two locations of the driven door front surface part 41 to narrow gradually toward the space Se. Further, the driven door guide part 43B is formed up to near an end of the driven door front surface part 41, and an end of the driven door guide part 43B faces the space Se.

The air-conditioning device 10B described above also produces a predetermined effect of the present invention.

In addition, the driven door guide part 43B is structured by a rib raised from the driven door front surface part 41. This enables guiding more volume of air by the heater-door flow path R2. Air can be efficiently blown toward an arbitrary location depending on the height or shape of the rib.

### <Example 4>

Next, an air-conditioning device 10C in Example 4 is described based on the drawings.

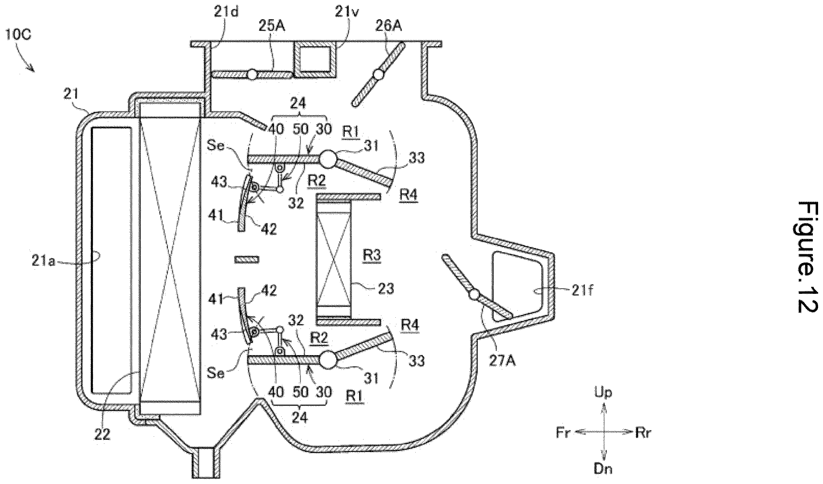

FIG. 12 illustrates a cross-sectional configuration of the air-conditioning device 10C according to Example 4 and corresponds to FIG. 2. As for parts in common with the air-conditioning device according to any of Example 1 to Example 3, the same reference numerals are used and the detailed descriptions are omitted.

The air-conditioning device 10C includes the two air mix doors 24, 24 that are so provided as to sandwich the heater 23 from above and below.

The air-conditioning device 10C described above also produces a predetermined effect of the present invention.

### <Example 5>

Next, an air-conditioning device 10D in Example 5 is described based on the drawings.

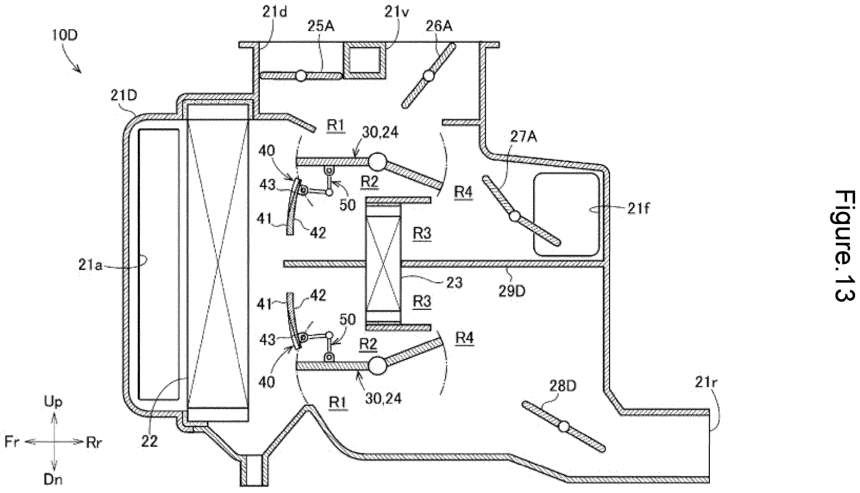

FIG. 13 illustrates a cross-sectional configuration of the air-conditioning device 10D according to Example 5 and corresponds to FIG. 2. As for parts in common with the air-conditioning device according to any of Example 1 to Example 4, the same reference numerals are used and the detailed descriptions are omitted.

A case 21D of the air-conditioning device 10D is provided with a partition wall 29D that partitions the interior of the case 21D in the up and down direction and extends in the front and rear direction.

The interior of the case 21D is partitioned also in the left and right direction by a partition wall (not illustrated). In short, the interior of the case 21D is partitioned into four rooms of left, right, top, and bottom.

Further, the air-conditioning device 10D includes the two air mix doors 24, 24 that are so provided as to sandwich the heater 23 from above and below.

In the bottom room resulting from the division by the partition wall 29D, a rear outlet 21r for blowing air toward a rear part of the vehicle interior is formed. Air blown out of the rear outlet 21r is guided, for example, to the rear seat via a duct.

The rear outlet 21r is formed in the case 21D and it can be said that the rear outlet 21r is one of outlets for blowing air to the vehicle interior. The rear outlet 21 is formed in each of the left and right rooms of the case 21.

Further, a fourth open/close door 28D is provided which faces the rear outlet 21r to open and close only the rear outlet 21r.

The air-conditioning device 10D described above also produces a predetermined effect of the present invention.

Further, according to the air-conditioning device 10D, it is possible to blow air having different temperatures to each of the passengers (four passengers) sitting left and right in the front seats and the rear seats.

### <Example 6>

Next, an air-conditioning device 10E in Example 6 is described based on the drawings.

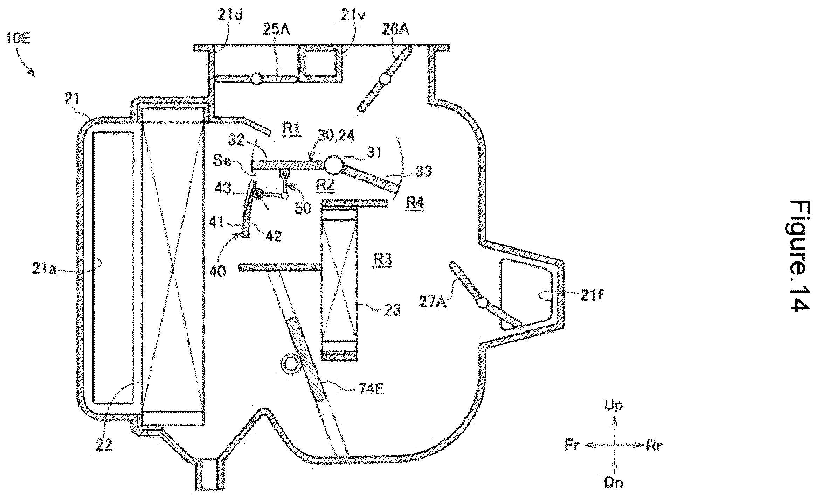

FIG. 14 illustrates a cross-sectional configuration of the air-conditioning device 10E according to Example 6 and corresponds to FIG. 2. As for parts in common with the air-conditioning device according to any of Example 1 to Example 4, the same reference numerals are used and the detailed descriptions are omitted.

The air-conditioning device 10E includes one air mix door 24 and one air mix shutter 74E inside the case 21.

The air mix shutter 74E is provided so as to be movable linearly from the cold air flow path R1 to the hot air flow path R3. As with the air mix door 24, the air mix shutter 74E can control a ratio between air passing through the heater 23 and air bypassing the heater 23.

The air-conditioning device 10E described above also produces a predetermined effect of the present invention.

The air-conditioning device according to the present invention is also applicable to an air-conditioning device in the form of a combination of the examples, and is not limited to the examples. For example, the driven door guide part may be structured by both of a concave portion formed in a concave shape and a rib raised from the driven door front surface part. Further, the air mix door may be formed with both of the rib raised from the driven door front surface part and the drive door guide part.

Although the present invention has been described using an example in which the case is partitioned into left and right rooms, the present invention is also applicable to an air-conditioning device that is not partitioned into left and right rooms.

The present invention is not limited to the examples as long as operations and advantageous effects of the present invention are achieved.

### Industrial Applicability

The air-conditioning device according to the present invention is suitable to be mounted on a passenger vehicle.

### Reference Signs List

10, 10A, 10B, 10C, 10D, 10E: Vehicular air-conditioning device
21, 21D: Case
21d: Defroster outlet (Outlet)
21v: Vent outlet (Outlet)
21f: Foot outlet (Outlet)
21r: Rear outlet (Outlet)
22: Evaporator
23: Heater
24, 24A, 24B: Air mix door
30, 30A: Drive door
31: Rotary shaft
32: First closing plate
33: Second closing plate
38A: Drive door guide part
40, 40B: Driven door
41: Driven door front surface part
42: Driven door rear surface part
43, 43B: Driven door guide part
50: Link
R2: Heater-door flow path
Se: Space

## Claims

1. A vehicular air-conditioning device (10; 10A; 10B; 10C; 10D; 10E) comprising a case (21; 21D) in which air can flow, the case (21; 21D) housing an evaporator (22) capable of cooling air, a heater (23) capable of heating air that has passed through the evaporator (22), and an air mix door (24; 24A; 24B) capable of controlling a ratio between air passing through the heater (23) and air bypassing the heater (23), and the case (21; 21D) being formed with a plurality of outlets (21d, 21v, 21f; 21r) for blowing out air to a vehicle interior, wherein
the air mix door (24; 24A; 24B) includes
a drive door (30; 30A) that includes a rotary shaft (31) that extends so as to be substantially orthogonal with reference to a flow direction of air bypassing the heater (23) and is rotatably provided in the case (21; 21D), and a first closing plate (32) that extends from the rotary shaft (31) to be movable in an upstream of the rotary shaft (31), and
a driven door (40; 40B) that is connected to the first closing plate (32) via a link (50) and driven by the drive door (30; 30A);
the drive door (30; 30A) is controlled to be at any positions of the following: a fully cool position at which a ratio of air bypassing the heater (23) is maximized; a fully hot position at which a ratio of air passing through the heater (23) is maximized; and a temperature conditioned position which is a position between the fully cool position and the fully hot position and at which part of air having passed through the evaporator (22) bypasses the heater (23);
in a case where the drive door (30; 30A) is at the temperature conditioned position, an end portion of the drive door (30; 30A) and an end portion of the driven door (40; 40B) are spaced apart, and a space (Se) through which air can pass is formed between the end portion of the drive door (30; 30A) and the end portion of the driven door (40; 40B) ;
in a case where the drive door (30; 30A) is at the temperature conditioned position, a heater-door flow path (R2) in which part of air having passed through the evaporator (22) passes is formed between the rotary shaft (31) and the heater (23);
the driven door (40; 40B) includes a driven door front surface part (41) that can face the evaporator (22) and a driven door rear surface part (42) that is a rear surface of the driven door front surface part (41); and
the driven door front surface part (41) is formed with a driven door guide part (43; 43B) that guides part of air flowing near the driven door front surface part (41) toward the space (Se).

2. The vehicular air-conditioning device according to claim 1, wherein the driven door guide part (43) includes a concave portion formed in a concave shape.

3. The vehicular air-conditioning device according to claim 2, wherein the driven door guide part (43) is formed gradually deeper in a curved shape toward the space (Se).

4. The vehicular air-conditioning device according to any one of claims 1 to 3, wherein the driven door guide part (43B) is structured by a rib raised from the driven door front surface part (41).

5. The vehicular air-conditioning device according to any one of claims 1 to 4, wherein the driven door guide part (43; 43B) narrows gradually toward the space (Se).

6. The vehicular air-conditioning device according to any one of claims 1 to 5, wherein the drive door (30A) is provided with a drive door guide part (38A) for guiding air having passed through the space (Se) and the drive door guide part (38A) is provided so as to face the heater-door flow path (R2).
